# FASCICULE DE BREVET EUROPEEN

(11) **EP 3 123 149 B1**
(45) Date de publication et mention de la délivrance du brevet: **30.08.2023**
(21) Numéro de dépôt: 15719620.5
(22) Date de dépôt: 23.03.2015
(51) Int. Cl.: G01N 21/64, G02B 21/16, G02B 21/00, G05B 19/418, G05B 19/042

(54) **PROCÉDÉ DE PILOTAGE MULTI-MODULES FONCTIONNELS INCLUANT UN DISPOSITIF D'IMAGERIE MULTI-LONGUEUR D'ONDE, ET SYSTÈME DE PILOTAGE CORRESPONDANT**
VERFAHREN ZUR STEUERUNG EINER VIELZAHL FUNKTIONALER MODULE MIT EINER MULTI-WELLENLÄNGEN-BILDGEBUNGSVORRICHTUNG UND ZUGEHÖRIGES STEUERUNGSSYSTEM
METHOD FOR CONTROLLING A PLURALITY OF FUNCTIONAL MODULES INCLUDING A MULTI-WAVELENGTH IMAGING DEVICE, AND CORRESPONDING CONTROL SYSTEM

(30) Priorité: 28.03.2014 FR 1452766
(43) Date de publication de la demande: 01.02.2017
(73) Titulaire: CNRS (Centre National de la Recherche Scientifique), 75016 Paris Cedex 16 (FR); Université de Rennes I, 35065 Rennes Cedex (FR)
(72) Inventeur: ROUL, Julien, F-35043 Renne Cedex (FR); TRAMIER, Marc, F-35043 Rennes Cedex (FR); PECREAUX, Jacques, F-35043 Rennes Cedex (FR)
(74) Mandataire: Vidon Brevets & Stratégie
(86) Numéro de dépôt international: PCT/EP2015/056157
(87) Numéro de publication internationale: WO 2015/144650

(56) Documents cités:
- EP-A2- 1 388 397
- US-A1- 2005 248 764
- Meier, Hans: "Verteilte, kooperative Steuerung maschinennaher Abläufe", Institut für Werkzeugmaschinen und Betriebswissenschaften Technische Universität München Internet, 10 mai 2001 (2001-05-10), pages Frontpage-30, XP002728551, Extrait de l'Internet: URL:http://www.iwb.tum.de/iwbmedia/Meier.p df [extrait le 2014-08-18]

## Description

### 1. DOMAINE DE L'INVENTION

L'invention relève du domaine des systèmes d'imagerie et peut trouver des exemples d'applications en microscopie multi-longueur d'onde ou multi-couleur.

Plus précisément, l'invention concerne une technique de pilotage d'une pluralité de modules (ou blocs) fonctionnels compris dans un dispositif d'imagerie en microscopie.

L'invention s'applique notamment, mais non exclusivement, au domaine de l'imagerie d'échantillons biologiques pour l'analyse des processus dynamiques en biologie cellulaire, nécessitant l'utilisation d'un système de microscopie de fluorescence multi-longueur d'onde.

### 2. ARRIÈRE-PLAN TECHNOLOGIQUE

On s'attache plus particulièrement dans la suite de ce document à décrire la problématique existant dans le domaine de l'imagerie en microscopie multi-longueur d'onde, à laquelle ont été confrontés les inventeurs de la présente demande de brevet. De manière générale, un dispositif d'imagerie multi-longueur d'onde consiste à imager un échantillon soumis à différentes longueurs d'onde d'excitation. L'invention ne se limite bien sûr pas à ce domaine particulier d'application, mais présente un intérêt pour toute technique de pilotage mise en oeuvre dans un système d'imagerie en microscopie devant faire face à une problématique proche ou similaire.

### 2.1 Contexte de l'invention

L'Institut de Génétique et Développement de Rennes (IGDR) développe un dispositif d'imagerie basée sur la microscopie de fluorescence multi-longueur d'onde, pour étudier la dynamique des activités biochimiques (comme le métabolisme cellulaire par exemple) ou biophysiques (comme la dynamique de la division cellulaire) sur des échantillons vivants. Ce dispositif d'imagerie correspond en effet à une forte demande des biologistes qui souhaitent utiliser une technique d'analyse spatio-temporelle et *in vivo* des événements biologiques, et ainsi accéder à des informations fonctionnelles de l'échantillon observé.

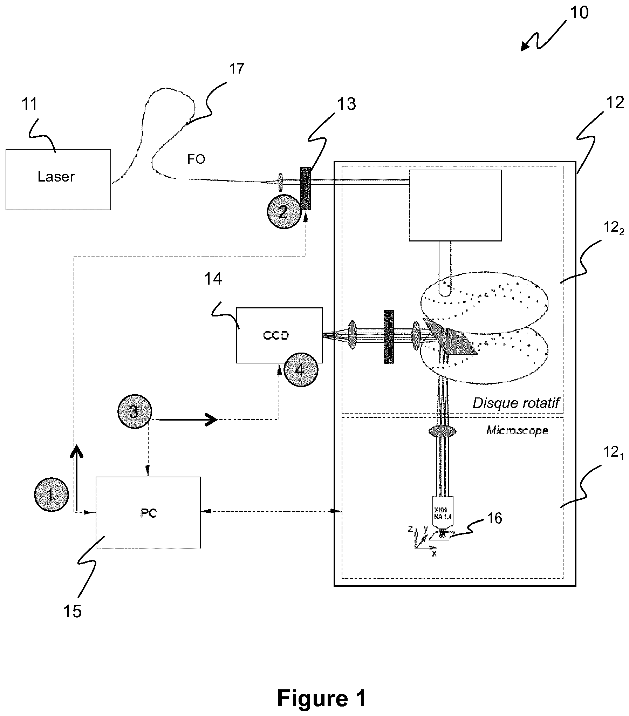

La **figure 1** illustre un exemple d'un dispositif d'imagerie multi-longueur d'onde 10 traditionnel comprenant une source de lumière laser 11 couplée à un microscope multi-focal 12 au moyen d'une fibre optique 17 (notée « FO » sur la figure). La source de lumière 11 produit une lumière laser blanche d'excitation (aussi appelée « supercontinuum ») sous forme d'impulsions de l'ordre de quelques picosecondes, destinée à illuminer l'échantillon 16 à observer. Le microscope multifocal 12 est composé d'un module d'imagerie 12₁ coopérant avec un disque rotatif 12₂ confocal au plan de l'échantillon, aussi couramment appelé *« spinning disk ».* Le dispositif 10 comprend en outre un module de sélection de longueurs d'onde 13 se présentant sous la forme d'un disque mobile doté d'un ensemble de filtres optiques interférentiels (filtres passe-bas ou passe-bande). Ce disque à filtres optiques est monté mobile en rotation autour d'un axe de rotation permettant de procéder à la sélection d'une longueur d'onde ou d'une plage de longueurs d'onde souhaitée en fonction du filtre optique présenté. L'acquisition des images est réalisée au moyen d'un module de capture d'images 14, par exemple une caméra du type capteur CCD (pour « *Charged Couple Device »)* ou CMOS (pour *« Complémentary Metal Oxyde Semiconductor »*).

Pour réaliser une acquisition multi-longueur d'onde, chacun des modules (ou blocs) fonctionnels décrit ci-dessus est piloté au moyen de commandes unidirectionnelles émises successivement par un logiciel de pilotage stocké sur une unité centrale 15 (noté « PC » sur la figure pour *« Personal Computer »*). Ces modules sont toutefois capables de retourner des informations sur leur état ou configuration suite à une interrogation via le logiciel et le PC.

Le fonctionnement de la technique actuelle de pilotage multi-modules peut être résumé de la façon suivante :
- étape 1 : l'unité centrale 15 qui héberge le logiciel de pilotage envoie une commande au sélecteur de longueur d'onde pour qu'il sélectionne une nouvelle longueur d'onde d'excitation,
- étape 2 : le sélecteur de longueur d'onde exécute la commande préalablement reçue et déplace le disque à filtres optiques interférentiels du module 13 de façon à sélectionner la longueur d'onde (ou plage de longueurs d'onde) d'excitation souhaitée ;
- étape 3 : l'unité centrale 15 envoie ensuite une commande au module de capture d'image 14 pour qu'il réalise une prise de vue de l'échantillon soumis à la longueur d'onde d'excitation sélectionnée,
- étape 4 : le module de capture d'image 14 exécute la commande et procède à l'acquisition d'une image (ou d'une série d'images) de l'échantillon.

A noter que chacune de ces étapes est illustrée sur la figure 1 par un cercle dans lequel est inscrit le numéro de l'étape concernée. La même convention est adoptée dans les figures suivantes relatives à la présente invention (et qui sont décrites en détail dans la suite de la description au paragraphe 5).

Ces quatre étapes sont réitérées autant de fois que nécessaire afin que l'échantillon puisse être imagé pour d'autres longueurs d'onde d'excitation. Une itération des quatre étapes ci-dessus correspond donc à la capture d'une image ou d'une série d'images de l'échantillon soumis à un rayonnement de longueur d'onde d'excitation donnée.

A noter qu'il est également possible de changer la position de l'échantillon 16 ou de l'objectif du microscope dans l'espace au cours de l'acquisition des images notamment selon l'axe optique du microscope 12₁ (axe Z) afin d'imager en profondeur l'échantillon. Combiné à la microscopie multi-focale, ce processus permet d'imager en profondeur différentes coupes optiques de l'échantillon en supprimant la fluorescence en dehors du plan observé (source de bruit optique). Cela requiert donc un pilotage additionnel du module fonctionnel 12₁.

Le document US 2005 248 764 A1 divulgue une commande coopérative d'un microscope. If

### 2.2 Problème technique de l'invention

La technique actuelle de pilotage de modules fonctionnels par un logiciel dédié présente toutefois plusieurs inconvénients. Cette technique nécessite en effet que les modules de capture d'image et de sélection de longueurs d'onde soient activés successivement au moyen de commandes unidirectionnelles envoyées de manière centralisée par le logiciel de pilotage, ce qui rend le pilotage des modules relativement lent et relativement peu robuste pour faire face à d'éventuels problèmes de synchronisation.

De plus, le fait de contrôler le disque à filtres optiques par le logiciel de pilotage, combiné à la relativement faible vitesse de rotation de celui-ci, rend la cadence d'acquisition des images lente.

Par ailleurs, en utilisant cette configuration, les inventeurs se sont aperçus de la présence de fuites spectrales de la source laser dans le canal d'émission, ce qui n'est pas optimal. En effet, du fait des caractéristiques intrinsèques des filtres actuellement utilisés, il n'est pas toujours possible de filtrer toutes les longueurs d'ondes non souhaitées issues de la source laser d'excitation (notamment l'infra-rouge). Ces longueurs d'ondes non souhaitées se retrouvent sur l'échantillon venant éventuellement l'altérer et sur le capteur d'images, posant ainsi des problèmes pour l'observation de la fluorescence de l'échantillon.

### 3. OBJECTIFS DE L'INVENTION

L'invention, dans au moins un mode de réalisation, a notamment pour objectif de pallier ces différents inconvénients de l'état de la technique.

Plus précisément, dans au moins un mode de réalisation de l'invention, un objectif est de proposer une technique de pilotage permettant d'améliorer la vitesse d'acquisition des images ainsi que la robustesse du processus d'imagerie multi-longueurs d'onde.

Au moins un mode de réalisation de l'invention a également pour objectif de fournir une telle technique qui soit relativement simple et peu coûteuse à mettre en oeuvre.

Un autre objectif d'au moins un mode de réalisation de l'invention est de fournir une telle technique qui permette de réduire la présence de fuites spectrales et ainsi d'améliorer la qualité des images capturées.

### 4. EXPOSÉ DE L'INVENTION

Il est proposé un procédé selon la revendication 1.

Le principe de l'invention repose sur la mise en oeuvre d'un mécanisme d'échange bidirectionnel de signaux de pilotage entre les modules eux-mêmes, pour activer la fonction qui leur est propre. Un signal de pilotage reçu par un module est interprété comme un signal de déclenchement de la fonction qui lui est associée. Ainsi, par un jeu de « ping-pong » entre les modules, le procédé selon l'invention permet de commander successivement chaque module fonctionnel sans passer par une entité logicielle centrale et décisionnelle comme c'est le cas dans l'état de la technique. Ainsi, un signal de pilotage reçu par le premier module déclenche une sélection d'une longueur d'onde ou d'une plage de longueurs d'onde et un signal de pilotage reçu par le second module déclenche une prise de vue de l'échantillon pour la longueur d'onde sélectionnée par le premier module. Cette approche asynchrone et parallèle a donc pour effet d'améliorer la vitesse d'acquisition des images par le module de capture d'images ainsi que la robustesse du processus d'imagerie multi-longueur d'onde. Le nombre d'itérations des étapes a) à d) peut être défini en fonction du nombre de longueurs d'onde d'excitation auxquelles l'échantillon doit être exposées (par exemple, le nombre d'itérations peut être choisi égal au nombre de longueurs d'onde d'excitation sélectionnées, soit une prise de vue de l'échantillon pour chaque longueur d'onde sélectionnée).

Selon l'invention, le dispositif d'imagerie en microscopie comprend au moins un troisième module fonctionnel adapté pour réaliser une troisième fonction, le procédé comprenant en outre les étapes suivantes :
e) le premier module fonctionnel envoie un troisième signal de pilotage au troisième module fonctionnel sur réception du deuxième signal de pilotage ;
f) le troisième module fonctionnel déclenche l'activation de ladite troisième fonction sur réception du troisième signal de pilotage;
g) le troisième module fonctionnel envoie un quatrième signal de pilotage au premier module fonctionnel lorsque le troisième module fonctionnel a réalisé ladite troisième fonction ;
l'étape a) consistant à envoyer un premier signal de pilotage au deuxième module fonctionnel étant effectuée lorsque le premier module fonctionnel a réalisé ladite première fonction et sur réception du quatrième signal de pilotage.

Ainsi, le procédé selon l'invention offre la possibilité de piloter, de façon relativement simple, au moins un troisième module fonctionnel au sein du dispositif d'imagerie multi-longueur d'onde. Pour ce faire, un mécanisme d'échange de signaux bidirectionnel est mis en oeuvre entre les premier et troisième modules fonctionnels pour permette un pilotage successif (jeu de « ping-pong ») desdits modules sans passer par une entité logicielle centrale.

La condition supplémentaire pour que le premier module envoie un signal de pilotage au deuxième module pour déclencher la deuxième fonction, est qu'il ait reçu un signal de pilotage du troisième module, ce signal étant interprété par celui-ci comme un signal d'activation de l'envoi d'un signal de pilotage au deuxième module.

Selon un aspect particulier de l'invention, une itération des étapes e) à g) est effectuée à la suite des étapes a) à d) à une fréquence égale 1/n, avec n le nombre de longueurs d'onde d'excitation auxquelles est soumis l'échantillon, le nombre d'itérations des étapes a) à d) étant égal à n.

Ainsi, il n'est pas nécessaire de déclencher la fonction du troisième module à chaque itération des étapes a) à d) (autrement dit à chaque fois que les fonctions des premier et deuxième modules sont activées). Ceci permet d'offrir une plus grande souplesse dans le pilotage d'une pluralité de modules.

Selon l'invention, , l'étape a) d'envoi d'un premier signal de pilotage et l'étape b) d'envoi d'un deuxième signal de pilotage sont effectuées par un module logique dédié indépendant des premier et deuxième modules fonctionnels.

Ceci présente l'avantage de pouvoir s'adapter à n'importe quelle architecture imposée par le dispositif d'imagerie.

Selon l'invention, le dispositif d'imagerie comprend au moins un troisième module fonctionnel adapté pour réaliser une troisième fonction, le procédé comprenant en outre les étapes suivantes :
- lorsque le deuxième module fonctionnel a réalisé ladite deuxième fonction, le module logique dédié envoie un troisième signal de pilotage au troisième module fonctionnel en même temps que l'étape d'envoi du deuxième signal de pilotage au premier module fonctionnel ;
- le troisième module fonctionnel déclenche l'activation de ladite troisième fonction sur réception du troisième signal de pilotage ;
- le troisième module fonctionnel envoie un quatrième signal de pilotage au module logique dédié lorsque le troisième module fonctionnel a réalisé ladite troisième fonction ;
l'étape a) d'envoi d'un premier signal de pilotage au deuxième module fonctionnel étant effectuée lorsque le premier module fonctionnel a réalisé ladite première fonction et sur réception du quatrième signal de pilotage.

Ainsi, le procédé selon l'invention offre la possibilité de piloter au moins un troisième module fonctionnel. Pour ce faire, un mécanisme d'échange de signaux bidirectionnel est mis en oeuvre entre le module logique dédié et le troisième module fonctionnel pour permettre un pilotage successif des modules fonctionnels entre eux via le module logique.

Selon l'invention, le troisième module fonctionnel est un module de positionnement de l'échantillon et la troisième fonction consiste à réaliser un déplacement de l'échantillon dans au moins une direction de l'espace.

Cette caractéristique permet d'effectuer une acquisition tridimensionnelle en sus d'une acquisition multi-longueur d'onde. On pourrait donc prévoir de n'activer la fonction du troisième module (déplacement de l'échantillon dans l'espace) qu'une fois tous les n longueurs d'onde d'excitation, afin d'optimiser le nombre d'échanges de signaux de pilotage entre modules. Le déplacement de l'échantillon peut être réalisé selon l'axe optique du module de capture d'image par exemple pour réaliser une acquisition 3D de l'échantillon.

Dans un autre mode de réalisation de l'invention, il est proposé un système selon la revendication 3. Le système comprenant en outre :
- des moyens d'émission d'un troisième signal de pilotage au troisième module fonctionnel, activés sur réception du deuxième signal de pilotage;
- des moyens de déclenchement de ladite troisième fonction, activés sur réception du troisième signal de pilotage.

Selon un aspect particulier, le module de sélection de longueurs d'onde comprend un ensemble de deux prismes optiques disposés de part et d'autre d'une fente montée mobile en translation et contrôlée par le deuxième signal de pilotage envoyé par le deuxième module fonctionnel pour réaliser une sélection d'au moins une longueur d'onde d'excitation.

Cette caractéristique permet d'offrir un sélecteur de longueur d'onde adapté à la microscopie de fluorescence plus rapide (de l'ordre de quelques dizaines de millisecondes) que ceux de l'état de la technique comme la roue de filtre ou les systèmes de filtre accordable. En outre, lorsqu'ils sont utilisés avec un laser supercontinuum, les systèmes de sélection par modulateur acousto-optique génèrent des fuites spectrales critiques et ne sont donc pas adaptés à la microscopie de fluorescence contrairement à l'invention. Cette configuration structurelle est particulièrement bien adaptée au pilotage matériel. La vitesse améliorée du processus de sélection de longueur d'onde combinée au pilotage hors entité logicielle centralisée (effet de synergie) permet de procurer un système d'imagerie multi-longueur d'onde rapide et plus robuste que les systèmes d'imagerie de l'état de la technique.

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1, déjà décrite en relation avec l'art antérieur, représente un exemple de dispositif d'imagerie multi-longueur d'onde multi-focal connu de l'état de l'art ;
- la figure 2 représente un exemple de dispositif d'imagerie multi-longueur d'onde multi-focal dans lequel peut être mis en oeuvre le procédé de pilotage selon un mode de réalisation particulier de l'invention ;
- la figure 3 présente un schéma-bloc fonctionnel illustrant le principe du procédé de pilotage selon un premier mode de réalisation de l'invention ;
- la figure 4 est un chronogramme représentant l'évolution temporelle des signaux de pilotage échangés entre les modules fonctionnels illustrés à la figure 3 ;
- la figure 5 présente un schéma-bloc fonctionnel illustrant le principe du procédé de pilotage selon un deuxième mode de réalisation de l'invention ;
- la figure 6 est un chronogramme représentant l'évolution temporelle des signaux de pilotage échangés entre les modules fonctionnels illustrés à la figure 5 ;
- la figure 7 présente les détails structurels d'un module de sélection de longueur d'onde selon un mode de réalisation particulier de l'invention ;
- les figures 8A et 8B présentent des schéma-blocs fonctionnels illustrant le principe du procédé de pilotage selon un troisième mode de réalisation de l'invention ;
- la figure 9 présente un schéma-bloc fonctionnel illustrant de manière générique le principe du procédé de pilotage selon l'invention.

### 6. DESCRIPTION DÉTAILLÉE

Sur toutes les figures du présent document, les éléments et étapes identiques sont désignés par une même référence numérique.

Le principe général de l'invention consiste à mettre en oeuvre un mécanisme d'échange bidirectionnel de commandes de pilotage entre les modules fonctionnels eux-mêmes (plutôt qu'un mode de pilotage unidirectionnel centralisé et commandé par un logiciel dédié), avec des mouvements asynchrones et/ou simultanés de certains modules suivi de points de contrôle à certains moments de l'exécution et permettant d'offrir un système d'imagerie multi-longueur d'onde rapide et robuste. Ces points de contrôle sont réalisés non par le logiciel exécuté sur l'ordinateur comme dans l'art antérieur mais via un ou plusieurs contrôleurs attachés respectivement à certains modules fonctionnels et/ou via un contrôleur dédié.

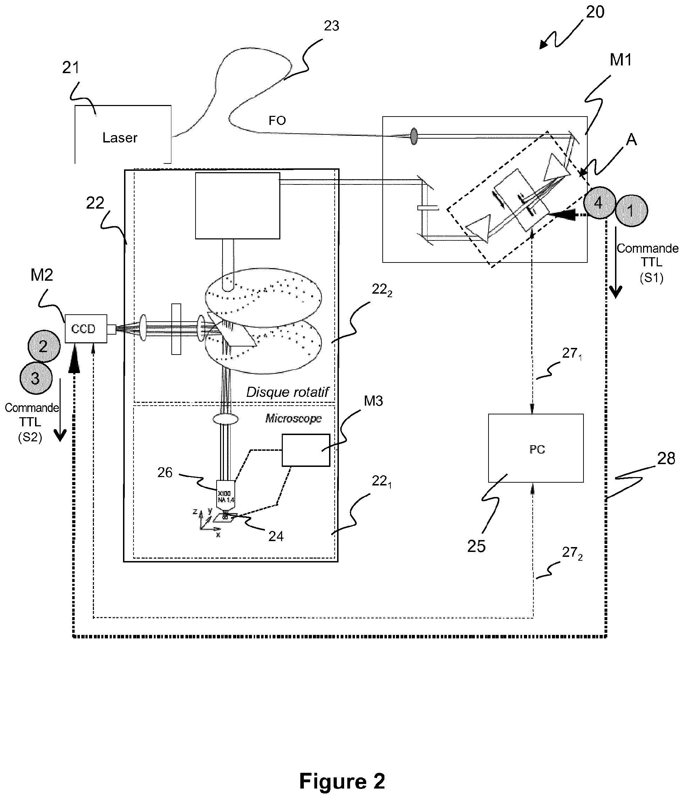

La **figure 2** représente un exemple de dispositif d'imagerie multi-longueur d'onde multi-focal 20 dans lequel peut être mis en oeuvre le procédé de pilotage selon un mode de réalisation particulier conforme à l'invention.

Le dispositif d'imagerie 20 a pour objet d'imager un échantillon 24 soumis à différentes longueurs d'onde d'excitation. Il comprend une source de lumière laser 21 couplée, via une fibre optique 23 (notée « FO » sur la figure), à un système de sélection en longueur d'onde (noté M1) lui-même couplé en espace libre à un microscope multi-focal 22. La source de lumière 21 produit une lumière laser blanche d'excitation, appelée lumière « supercontinuum », pulsée selon un régime d'impulsions de l'ordre de quelques picosecondes, destinée à illuminer l'échantillon 24 à observer. Le microscope multifocal 22 est composé d'un module d'imagerie 22₁ coopérant avec un disque rotatif confocal 22₂, aussi couramment appelé *« spinning disk ».*

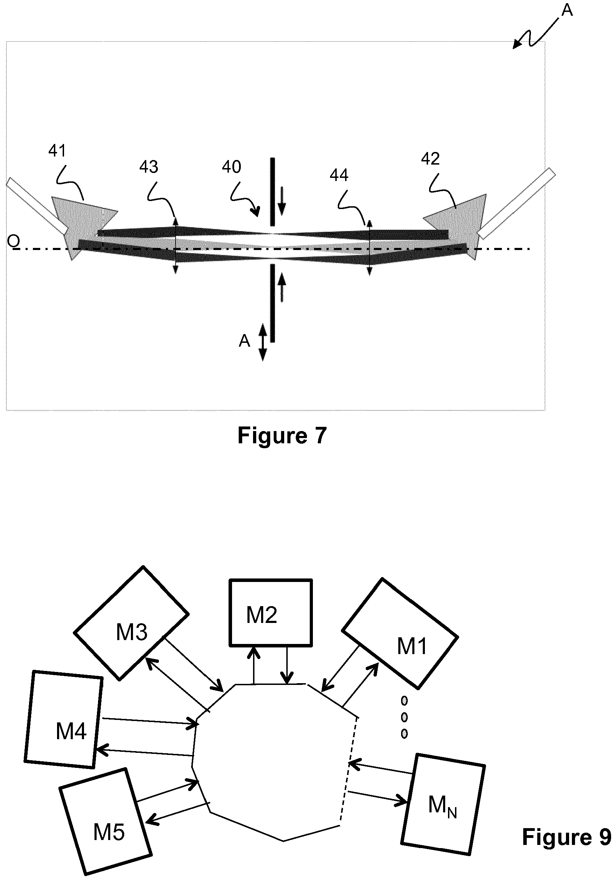

Le dispositif d'imagerie 20 comprend les modules fonctionnels suivants :
- un module de sélection de longueurs d'onde M1, adapté pour réaliser une première fonction (notée F1 par la suite) qui consiste à sélectionner une longueur d'onde ou une plage de longueurs d'onde spécifique, par déplacement d'une fente mobile 40 compris entre deux prismes optiques 41 et 42 (dont le principe est détaillé plus loin en relation avec la figure 7), pour exciter l'échantillon 24 ;
- un module de capture d'image M2, par exemple une caméra du type CCD (pour *« Charged Couple Device »*) ou CMOS (pour « *Complémentary Metal Oxyde Semiconductor »),* adapté pour réaliser une deuxième fonction (notée F2 par la suite) qui consiste à capturer une image de l'échantillon 24 ;
- un module de déplacement de l'échantillon M3, adapté pour réaliser une troisième fonction (notée F3 par la suite) consistant à déplacer l'échantillon 24 ou l'objectif du microscope dans au moins une direction de l'espace selon l'axe X, Y et/ou Z.

### Exemple d'un pilotage à deux modules fonctionnels

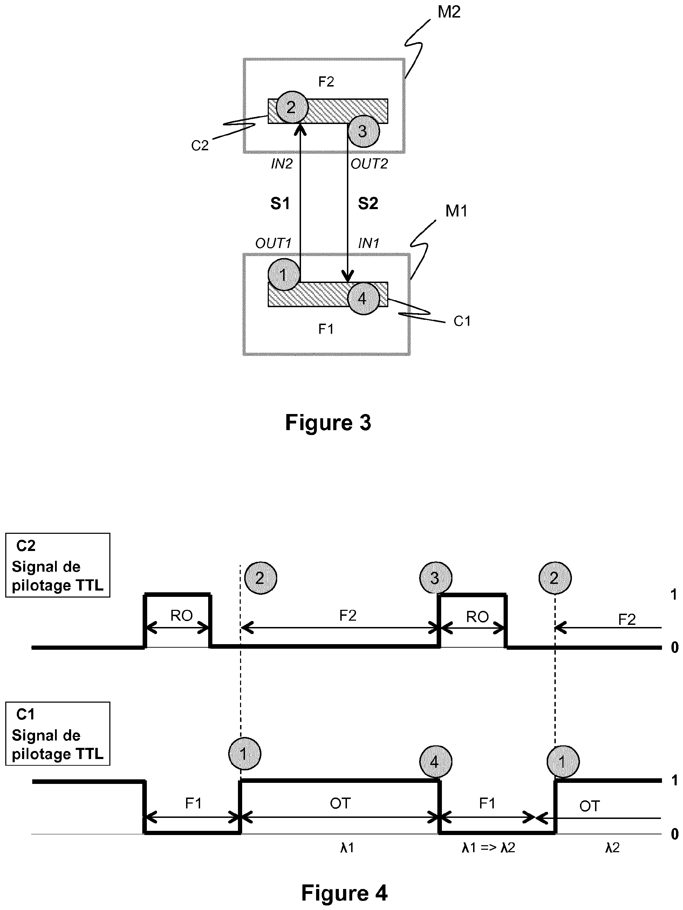

On présente ci-après, en relation avec les **figures 3** et **4****,** le principe du procédé de pilotage selon un premier mode de réalisation particulier de l'invention, dans lequel un pilotage de deux modules fonctionnels M1, M2, est réalisé. La figure 3 représente un schéma-bloc fonctionnel du système de pilotage des modules fonctionnels M1 et M2 et la figure 4 représente un chronogramme montrant l'évolution temporelle des signaux de pilotage échangées entre les modules fonctionnels M1 et M2.

Le procédé de pilotage présenté ici est mis en oeuvre pour imager un échantillon soumis à deux longueurs d'onde d'excitation distinctes λ1, λ2. Le nombre de longueurs d'onde auxquelles l'échantillon peut être soumis au cours de l'acquisition multi-couleur est ici volontairement limité à titre de descriptif purement pédagogique, de manière à ne pas surcharger les figures et la description associée. Bien entendu, un nombre plus important de longueurs d'onde peuvent être utilisées si nécessaire sans sortir du cadre de l'invention.

Les modules de sélection de longueurs d'onde M1 et de capture d'image M2 comprennent respectivement les contrôleurs d'entrée-sortie C1 et C2, qui gèrent les activités de leur module respectif et exécutent le transfert des données :
- le contrôleur C1 gère la réalisation de la fonction F1, à savoir la sélection d'une longueur d'onde d'excitation de l'échantillon (par déplacement de la fente mobile 40 sur la longueur d'onde d'excitation visée),
- la contrôleur C2 gère la réalisation de la fonction F2, à savoir la capture d'image ou prise de vue de l'échantillon.

Une macro-commande contenant une séquence d'instructions de code de programme pour la mise en oeuvre du procédé est chargée, depuis l'unité centrale 25, via le lien de communication logicielle 27₁, par le contrôleur C1 du module M1 pour y être exécutée. La macro-commande se trouve embarquée dans le contrôleur du module M1.

La macro-commande est définie de manière à ce que le contrôleur C1 du module M1 déclenche la sélection d'une nouvelle longueur d'onde à chaque fois qu'il reçoit un signal de pilotage TTL et émet un signal de pilotage TTL à chaque fois qu'il a terminé de réaliser cette fonction.

Avant d'exécuter la macro-commande, le module de capture d'image M2 est démarré en mode de déclenchement continu d'acquisition par signal externe par l'unité centrale 25 via le contrôleur C2 et le lien de communication logicielle 27₂. Il est ainsi configuré de manière à acquérir une image à chaque fois qu'il reçoit un signal de pilotage TTL.

A l'initialisation du procédé, le contrôleur C1 du module M1 sélectionne une première longueur d'onde d'excitation λ1 en déplaçant la fente mobile 40 entre les deux prismes optiques 41 et 42 jusqu'à se qu'elle soit positionnée sur la longueur d'onde d'excitation λ1. Ensuite l'acquisition multi-couleur démarre et est pilotée uniquement par les signaux TTL échangés entre les deux modules M1 et M2.

Le niveau logique 1 signifie l'émission d'un signal de pilotage TTL haut par l'un des modules fonctionnels et le niveau logique 0 signifie que le module fonctionnel en question émet un signal de pilotage TTL bas. Dans une **étape 1,** le contrôleur C1 du module M1 envoie un signal de pilotage TTL S1 haut au contrôleur du module M2 lorsque deux conditions sont remplies : d'une part la sélection de la longueur d'onde d'excitation λ1 a été réalisée par le contrôleur C1 (notée « OT » sur la figure pour « *On Target »,* qui signifie que la fente 40 est en position) et d'autre part le signal de pilotage TTL S2 du contrôleur C2 est bas lorsque le traitement de la prise de vue (notée RO sur la figure, pour « *Read Out* ») est terminé.

Dans une **étape 2,** le contrôleur C2 du module M2 déclenche une prise de vue de l'échantillon lorsqu'il reçoit le signal de pilotage TTL S1 haut du contrôleur C1 (Fonction F2). Le signal de pilotage TTL S1 reçu par le contrôleur C2 est interprété comme étant un signal de déclenchement d'une prise de vue de l'échantillon.

Dans une **étape 3,** le contrôleur C2 envoie un signal de pilotage TTL S2 haut au contrôleur du module M1 lorsque le contrôleur C2 a réalisé la prise de vue de l'échantillon exposé à la longueur d'onde λ1. En parallèle, le contrôleur C2 effectue un traitement de la prise de vue (notée RO sur la figure, pour « *Read Out »* en anglais).

Dans une **étape 4,** le contrôleur C1 déclenche la sélection d'une nouvelle longueur d'onde d'excitation λ2 lorsqu'il reçoit le signal de pilotage TTL S2 haut du contrôleur C2 (Fonction F1). Le signal de pilotage TTL S2 haut reçu par le contrôleur C1 est interprété comme étant un signal de déclenchement d'une sélection d'une nouvelle longueur d'onde.

Ces signaux de pilotages TTL bidirectionnels entre les modules M1 et M2 sont véhiculés à l'aide de moyens de communication filaire 28, tel que par exemple un câble coaxial avec connecteurs BNC.

Le déclenchement successif des fonctions des modules M1 et M2 au moyen de commandes de pilotage TTL échangées directement entre les modules eux-mêmes (par analogie à un jeu de « ping-pong ») permet d'assurer le pilotage des modules sans passer par l'unité centrale 25, ce qui permet d'améliorer la vitesse d'acquisition des images par le module M1. Chaque signal de pilotage TTL reçu est interprété par le module comme une commande de déclenchement d'action.

Le nombre d'itérations des étapes 1 à 4 présentées ci-dessus peut être défini en fonction du nombre de longueurs d'onde d'excitation auxquelles l'échantillon doit être exposé. Dans l'exemple présenté ici, le nombre de longueurs d'onde d'excitation auxquelles l'échantillon doit être exposé est égal à deux (λ1, λ2). Les étapes 1 à 4 doivent donc être réitérées deux fois afin d'obtenir deux prises de vue de l'échantillon chacune réalisée avec une longueur d'onde d'excitation distincte. A noter que les événements ne prennent pas nécessairement le même temps à chaque cycle. C'est un avantage car cela supprime des délais qui seraient nécessaires à imposer une régularité de l'acquisition des images.

### Exemple d'un pilotage à trois modules fonctionnels

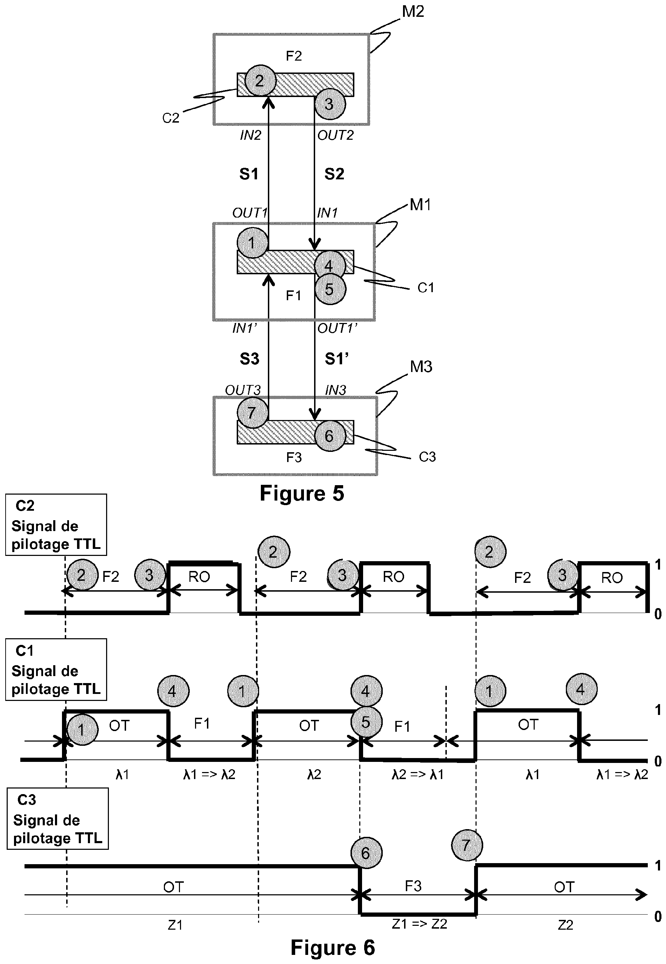

On présente ci-après, en relation avec les **figures 5** et **6****,** le principe du procédé de pilotage selon un deuxième mode de réalisation particulier de l'invention, dans lequel un pilotage de trois modules fonctionnels M1, M2, M3 est réalisé. La figure 5 représente un schéma-bloc fonctionnel du système de pilotage des modules fonctionnels M1, M2, M3 et la figure 6 représente un chronogramme montrant l'évolution temporelle des signaux de pilotage échangées entre les modules fonctionnels M1, M2, M3. Les modules de sélection de longueurs d'onde M1, de capture d'image M2 et de déplacement de l'échantillon M3 comprennent respectivement les contrôleurs d'entrée-sortie C1, C2 et C3, qui gèrent les activités de leur module respectif et exécutent le transfert des données :
- le contrôleur C1 gère la réalisation de la fonction F1, à savoir la sélection d'une longueur d'onde d'excitation de l'échantillon (par déplacement de la fente mobile sur la longueur d'onde d'excitation visée),
- la contrôleur C2 gère la réalisation de la fonction F2, à savoir la capture d'image ou prise de vue de l'échantillon,
- la contrôleur C3 gère la réalisation de la fonction F3, à savoir le déplacement de l'échantillon selon l'axe Z (correspondant à l'axe optique du microscope 22₁).

Une macro-commande contenant une séquence d'instructions de code de programme pour la mise en oeuvre du procédé est chargée, depuis l'unité centrale 25, via le lien de communication logicielle 27₁, par le contrôleur C1 du module M1 pour y être exécutée.

La macro-commande est définie de manière à ce que le contrôleur C1 du module M1 déclenche la sélection d'une nouvelle longueur d'onde à chaque fois qu'il reçoit un signal de pilotage TTL et émet un signal de pilotage TTL à chaque fois qu'il a terminé de réaliser cette fonction.

Avant d'exécuter la macro-commande, le module de capture d'image M2 est démarré en mode de déclenchement continu d'acquisition par signal externe par l'unité centrale 25 via le contrôleur C2 et le lien de communication logicielle 27₂. Il est ainsi configuré de manière à acquérir une image à chaque fois qu'il reçoit un signal de pilotage TTL.

A l'initialisation du procédé, le contrôleur C1 du module M1 sélectionne une première longueur d'onde d'excitation λ1 en déplaçant la fente mobile 40 entre les deux prismes optiques 41 et 42 jusqu'à se qu'elle soit positionnée sur la longueur d'onde d'excitation λ1. Le contrôleur C3 du module M3 déplace l'échantillon jusqu'à ce que celui-ci se trouve dans une première position Z1. Ensuite l'acquisition multi-couleur démarre et est pilotée uniquement par les signaux TTL échangés entre les trois modules M1, M2, M3.

Dans une **étape 1,** le contrôleur C1 du module M1 envoie un signal de pilotage TTL S1 haut au contrôleur du module M2 lorsque trois conditions sont remplies : d'une part la sélection de la longueur d'onde d'excitation λ1 a été réalisée par le contrôleur C1 (notée « OT » sur la figure pour « *On Target »* en anglais, qui signifie que la fente 40 est en position), d'autre part le signal de pilotage TTL S2 du contrôleur C2 est bas lorsque le traitement de la prise de vue (notée RO sur la figure, pour « *Read Out »* en anglais) est terminé, et enfin le signal de pilotage TTL S3 du contrôleur C3 est haut lorsque le déplacement en z est terminé (noté « OT » sur la figure pour « *On Target »* en anglais). Ainsi les fonctions F1 et F3 ont été exécutées parallèlement de manière indépendante et asynchrone. Le processus de contrôle des différentes fonctions fonctionne à la manière d'un *« check point* » (c'est-à-dire selon un mécanisme de vérification de points de contrôle) à une étape déterminée de la séquence sans aucune synchronisation des fonctions. Dans ce contexte, le procédé s'opère de la manière la plus rapide possible.

Dans une **étape 2,** le contrôleur C2 du module M2 déclenche une prise de vue de l'échantillon lorsqu'il reçoit le signal de pilotage TTL S1 haut du contrôleur C1 (Fonction F2). Le signal de pilotage TTL S1 haut reçu par le contrôleur C2 est interprété comme étant un signal de déclenchement d'une prise de vue de l'échantillon.

Dans une **étape 3,** le contrôleur C2 envoie un signal de pilotage TTL S2 haut au contrôleur du module M1 lorsque le contrôleur C2 a réalisé la prise de vue de l'échantillon exposé à la longueur d'onde λ1. En parallèle, le contrôleur C2 effectue un traitement de la prise de vue (notée RO sur la figure, pour « *Read Out »* en anglais).

Dans une **étape 4,** le contrôleur C1 déclenche la sélection d'une nouvelle longueur d'onde d'excitation λ2 lorsqu'il reçoit le signal de pilotage TTL S2 haut du contrôleur C2 (Fonction F1). Le signal de pilotage TTL S2 haut reçu par le contrôleur C1 est interprété comme étant un signal de déclenchement d'une sélection d'une nouvelle longueur d'onde.

Les étapes 1 à 4 ci-dessus sont réitérées deux fois successivement de manière à acquérir une première prise de vue de l'échantillon pour la longueur d'onde d'excitation λ1 et une deuxième prise de vue de l'échantillon pour la longueur d'onde d'excitation λ2, pour la position Z1 de l'échantillon (première coupe optique).

Dans une **étape 5,** le contrôleur C1 du module M1 envoie un nouveau signal de pilotage TTL S1' haut mais cette fois-ci au contrôleur du module M3 sur réception du signal de pilotage TTL S2 haut du contrôleur C2. En parallèle, le contrôleur C1 déclenche une sélection d'une nouvelle longueur d'onde d'excitation, soit λ1 (λ2 => λ1).

Dans une **étape 6,** le contrôleur C3 du module M3 déclenche un déplacement de l'échantillon jusqu'à ce que celui-ci se trouve dans une deuxième position Z2 (à l'initialisation du procédé, l'échantillon se trouvait en position Z1), sur réception du signal de pilotage TTL S1' haut envoyé par le contrôleur C1. Ainsi les deux fonctions F1 et F3 sont exécutées parallèlement de manière indépendante et asynchrone.

Dans une **étape 7,** le contrôleur C3 du module M3 envoie un signal de pilotage TTL S3 haut au contrôleur C1 lorsque le contrôleur C3 a terminé de déplacer l'échantillon, celui se trouvant dans la position Z2.

Puis, les étapes 1 à 4 sont à nouveau réitérées à deux reprises. Toutefois, ceci est réalisé aux conditions que : le contrôleur C1 ait, d'autre part, réalisé la sélection de la longueur d'onde d'excitation λ1 et, d'autre part, reçu le signal de pilotage TTL S3 haut envoyé par le contrôleur C3. Cette deuxième condition ainsi vérifiée permet de s'assurer que l'échantillon 24 se trouve bien dans la position visée (Z2 en l'occurrence) avant de lancer une nouvelle itération des étapes 1 à 4.

En partant à nouveau du principe qu'une prise de vue est effectuée pour chaque longueur d'onde d'excitation λ1, λ2, les étapes 1 à 4 ci-dessus sont réitérées deux fois successivement de façon à acquérir une première prise de vue de l'échantillon pour la longueur d'onde d'excitation λ1 et une deuxième prise de vue de l'échantillon pour la longueur d'onde d'excitation λ2, pour la position Z2 (deuxième coupe optique).

De manière générale, on considère qu'une itération des étapes 5, 6 et 7 est effectuée à une fréquence égale à 1/n, avec n le nombre de longueurs d'onde auxquels est soumis l'échantillon, le nombre d'itérations des étapes 1 à 4 étant égal à n.

L'ajout du module M3 au processus de pilotage propose un véritable intérêt en ce qu'il permet de réaliser une microscopie tridimensionnelle pilotée de manière ultra-rapide, en sus de la microscopie multi-longueur d'onde. En effet, les fonctions sont exécutées de manière indépendante et asynchrone sans passer par l'entité logicielle 25 et sans imposer de délais d'exécution pour être sûr que les fonctions aient bien été opérées. La microscopie multi-focale permet d'imager des coupes optiques d'un échantillon en supprimant de manière physique (grâce aux *« pinholes »* du *« spinning disk »* 22₂) la fluorescence en dehors du plan observé (qui est une source de bruit optique). Il est donc possible, en déplaçant l'échantillon (ou la tête du microscope 26) selon l'axe optique du microscope (axe Z), d'imager en profondeur l'échantillon. On parle dans la suite de ce document de microscopie « multi-z ».

Le procédé de pilotage présenté ici est mis en oeuvre pour imager un échantillon soumis à deux longueurs d'onde d'excitation distinctes λ1, λ2 et à deux positions distinctes Z1, Z2 selon l'axe Z. Le nombre de longueurs d'onde ainsi que le nombre de positions occupées par celui-ci est ici volontairement limité à titre de descriptif purement pédagogique, de manière à ne pas surcharger les figures et la description associée. Bien entendu, un nombre plus important de longueurs d'onde et/ou de positions de l'échantillon selon l'axe Z peut être prévu sans sortir du cadre de l'invention.

Selon une variante de réalisation, on peut prévoir que le module M3 est configuré pour déplacer, non pas l'échantillon, mais la tête du microscope 26 par rapport à l'échantillon selon l'axe Z.

Selon une autre variante de réalisation, on peut prévoir dans le procédé de déplacer l'échantillon 24 ou la tête du microscope 26 non seulement selon l'axe Z pour assurer la fonction de microscopie tridimensionnelle, mais également selon les axes X et Y pour permettre une analyse microscopique spatiale de l'échantillon.

Concernant le système de pilotage illustré à la figure 3 :
* le contrôleur C1 du module fonctionnel M1 comprend :
   - des moyens d'émission *OUT1* du signal de pilotage S1 au module fonctionnel M2, activés lorsque le module fonctionnel M1 a réalisé sa fonction F1 ;
   - des moyens de réception *IN1* du signal de pilotage S2 envoyé par le module fonctionnel M2 ;
   - des moyens de déclenchement de la fonction F1 activés sur réception du signal de pilotage S2 par les moyens de réception *IN1* ;
* le module fonctionnel M2 comprend :
   - des moyens d'émission *OUT2* du signal de pilotage S2 au module fonctionnel M1, activés lorsque le module fonctionnel M2 a réalisé sa fonction F2 ;
   - des moyens de réception *IN2* du signal de pilotage S1 envoyé par le module fonctionnel M1 ;
   - des moyens de déclenchement de la fonction F2 activés sur réception du signal de pilotage S1 par les moyens de réception *IN2* ;

Concernant le système de pilotage illustré à la figure 5 :
* le contrôleur C1 du module fonctionnel M1 comprend en outre :
   - des moyens d'émission *OUT1'* du signal de pilotage S1' au module fonctionnel M3 ;
   - des moyens de réception *IN1'* du signal de pilotage S3 envoyé par le module M3 ;
* le module fonctionnel M3 comprend :
   - des moyens d'émission *OUT3* du signal de pilotage S3 au module fonctionnel M1, activés lorsque le module fonctionnel M3 a réalisé sa fonction F3 ;
   - des moyens de réception *IN3* du signal de pilotage S1' envoyé par le module M1 ;
   - des moyens de déclenchement de la fonction F3 activés sur réception du signal de pilotage S1' par les moyens de réception *IN3.*

Un exemple simplifié d'instructions de la macro-commande embarquée dans le contrôleur du module M1 est présenté ci-dessous :

| | |
|---|---|
| Move | *bouge vers la première longueur d'onde (λ1)* |
| Wait IN1 = 0 | |
| Wait On target | |
| Send OUT 1 = 1 | *déclenche une prise de vue* |
| Wait IN1 = 1 | |
| Move | *bouge vers la deuxième longueur d'onde (λ2)* |
| Wait IN1 = 0 | |
| Wait On target | |
| Send OUT 1 = 1 | *déclenche une prise de vue* |
| Wait IN1 = 1 | |
| Send OUT1' = 1 | *déplace l'échantillon vers la deuxième position (Z2)* |
| Move | *bouge vers la première longueur d'onde (λ1)* |
| Wait On target | |
| Wait IN1 = 0 | |
| Wait IN1' = 1 | |
| Send OUT1 = 1 | *déclenche une prise de vue* |

La **figure 7** présente les détails structurels d'un module de sélection de longueur d'onde M1 selon un mode de réalisation particulier de l'invention.

Le module M1, représentée ici par la flèche A, comprend un ensemble de deux prismes optiques 41, 42 disposés de part et d'autre d'une fente 40 montée mobile en translation sur une platine de translation rapide. Les deux prismes sont associés chacun à un lentille optique 43, 44 respectivement. Les prismes optiques 41, 42 et lentilles 43, 44 forment un ensemble optique ayant un axe optique O.

La fente 40 est contrôlée par le contrôleur d'entrée-sortie C1 pour la sélection d'une longueur d'onde donnée. Un signal de pilotage TTL reçu par le contrôleur d'entrée-sortie C1 déclenche le déplacement de la fente perpendiculairement à l'axe optique O.

Selon une première réalisation, la fente est formée par un ensemble de deux lames séparées de largeur fixe et montées mobiles en translation perpendiculairement à l'axe optique O. Ceci permet d'ajuster la position de la fente par rapport à l'axe optique en fonction de la longueur d'onde ou de la plage de longueurs d'onde désirée.

Selon une deuxième réalisation, la fente est formée par un ensemble de deux lames séparées, chaque lame étant montée indépendamment mobile en translation perpendiculairement à l'axe optique O, de sorte à ajuster à la fois la largeur et la position de la fente par rapport à l'axe optique O. Ceci offre la possibilité de sélectionner une bande spectrale de largeur ajustable (par exemple de 3,5 à 300 nm) pour exciter l'échantillon.

Ces caractéristiques structurelles permettent d'offrir un sélecteur de longueur d'onde adapté à la microscopie de fluorescence plus rapide (de l'ordre de quelques dizaines de millisecondes) que ceux de l'état de la technique comme la roue de filtre ou les systèmes de filtre accordable. En outre, lorsqu'ils sont utilisés avec un laser supercontinuum, les systèmes de sélection par modulateur acousto-optique génèrent des fuites spectrales critiques et ne sont donc pas adaptés à la microscopie de fluorescence, contrairement à la présente invention. Dans les modes de réalisation de l'invention, la vitesse améliorée du processus de sélection de longueur d'onde combinée au pilotage hors logiciel permet de procurer un système d'imagerie multi-longueur d'onde rapide et plus robuste que les systèmes d'imagerie de l'état de la technique.

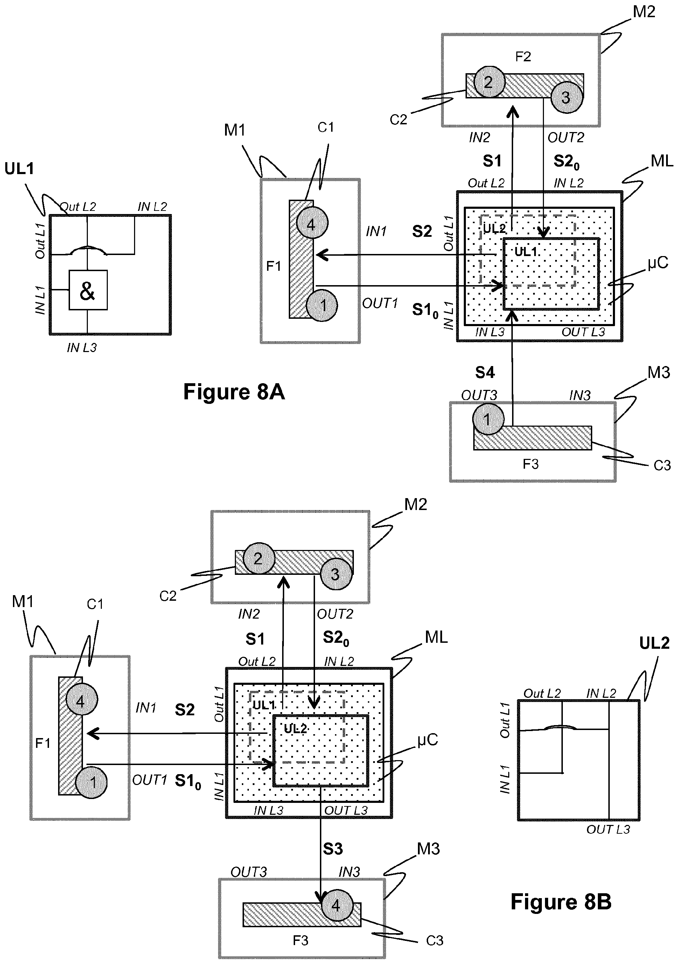

Dans les modes de réalisation particuliers discutés ci-dessus, la macro-commande est embarquée dans le module de sélection de longueur d'onde. Il est clair que de nombreux autres modes de réalisation de l'invention peuvent être envisagés. On peut notamment prévoir d'embarquer celle-ci dans un autre module fonctionnel, comme dans le module de positionnement M3 par exemple, sans sortir du cadre de l'invention ou encore dans un module extérieur d'entrée-sortie basé sur un microcontrôleur dédié comme illustré ci-dessous en relation avec les **figures 8A et 8B****.**

### Pilotage effectué par un module dédié

Le pilotage de trois modules fonctionnels M1, M2, M3 est réalisé au moyen d'un module logique de pilotage, référencé ML (pour Module Logique). Le module logique ML est équipé d'un micro-contrôleur dédié (noté « µC »), chargé d'exécuter le procédé de pilotage.

Le micro-contrôleur µC comprend une succession/alternance d'unités logiques, chaque unité logique mettant en oeuvre un groupe d'étapes spécifiques dans une acquisition complexe. Dans le cas présent, les modules fonctionnels M1, M2 et M3 fonctionnent indépendamment avec un signal d'entrée pour actionner leur fonction F1, F2 et F3 respectivement et un signal de sortie lorsque leur fonction respective est achevée. Ainsi, une simple unité logique permet d'effectuer les points de contrôles. Pour réaliser une séquence multi-couleur multi-z comme présenté plus haut, dans l'exemple de réalisation, deux unités logiques sont nécessaires :
- une première unité logique, référencée UL1, permet d'activer la fonction F1 seule (changement de longueur d'onde), après avoir actionné la fonction F2 (prise d'une image),
- une seconde unité logique, référencée UL2, permet d'activer les fonctions F1 (changement de longueur d'onde) et F3 (changement de position z) en même temps de manière asynchrone et parallèle après avoir actionné la fonction F2 (prise d'une image).

A l'initialisation du procédé, le contrôleur C1 du module M1 sélectionne une première longueur d'onde d'excitation λ1 en déplaçant la fente mobile 40 entre les deux prismes optiques 41 et 42 jusqu'à ce qu'elle soit positionnée sur la longueur d'onde d'excitation λ1. Le contrôleur C3 du module M3 déplace l'échantillon jusqu'à ce que celui-ci se trouve dans une première position z1. Ensuite l'acquisition multi-couleur démarre et est pilotée par les signaux TTL échangés entre les trois modules M1, M2 et M3 par l'intermédiaire des unités logiques UL1 et UL2. Ces signaux sont successivement relayés par les unités logiques UL1 et UL2.

Les unités logiques UL1 et UL2 sont précâblées, comme illustré de manière simplifiée sur les figures, de sorte à pouvoir effectuer les opérations logiques permettant le pilotage des trois modules M1, M2, M3.
> L'unité logique **UL1** est utilisée par le micro-contrôleur pour l'exécution d'un premier groupe d'étapes illustré à la **Figure 8A****.**

Dans une **étape 1,** le contrôleur C1 du module M1 envoie un signal de pilotage TTL S1₀ haut à l'unité logique UL1 lorsque la sélection de la longueur d'onde d'excitation λ1 a été réalisée par le contrôleur C1. Dans le même temps, le contrôleur C3 du module M3 envoie un signal de pilotage TTL S4 haut à l'unité logique UL1 lorsque le déplacement de l'échantillon à la position z1 a été réalisé par le contrôleur C3.

Dans une **étape 2,** l'unité logique UL1 effectue un point de contrôle. Il envoie un signal de pilotage TTL S1 haut au contrôleur du module M2 lorsque trois conditions sont remplies : réception du signal de pilotage TTL S1₀ provenant du module M1, réception du signal de pilotage TTL S4 provenant du module M3 (grâce à la porte logique ET symbolisée « & » sur la figure) et contrôle que le signal de pilotage TTL S2₀ du contrôleur C2 est bas confirmant que le traitement de la prise de vue est terminé. Le contrôleur C2 du module M2 déclenche alors une prise de vue de l'échantillon (Fonction F2) lorsqu'il reçoit le signal de pilotage TTL S1 haut de l'unité logique UL1, ce qui signifie que les deux modules M1 et M3 ont chacun effectué leur fonction de manière asynchrone et que le module M2 est prêt pour cette prise de vue. Le signal de pilotage TTL S1 haut reçu par le contrôleur C2 est interprété comme étant un signal de déclenchement d'une prise de vue de l'échantillon.

Dans une **étape 3,** le contrôleur C2 envoie un signal de pilotage TTL S2₀ haut à l'unité logique UL1 lorsque le contrôleur C2 a réalisé la prise de vue de l'échantillon exposé à la longueur d'onde λ1 et à la position z1. En parallèle, le contrôleur C2 effectue un traitement de la prise de vue.

Dans une **étape 4,** l'unité logique UL1 envoie un signal de pilotage TTL S2 haut au contrôleur du module M1 sur réception du signal de pilotage TTL S2₀. Le contrôleur C1 déclenche alors la sélection d'une nouvelle longueur d'onde d'excitation λ2 lorsqu'il reçoit le signal de pilotage TTL S2 haut de l'unité logique UL1 (Fonction F1). Le signal de pilotage TTL S2 haut reçu par le contrôleur C1 est interprété comme étant un signal de déclenchement d'une sélection d'une nouvelle longueur d'onde.

Il convient de noter que :
- le signal TTL S1₀ reçu par l'unité UL1 est interprété par celui-ci comme étant un signal de déclenchement de l'envoi du signal de pilotage TTL S1 à destination du module M2. L'unité logique UL1 effectue un « relai » du signal TTL haut fourni par le contrôleur C1 au contrôleur C2 seulement après avoir effectué un point de contrôle logique.
- le signal TTL S2₀ reçu par l'unité UL1 est interprété par celui-ci comme étant un signal de déclenchement de l'envoi du signal de pilotage TTL S2 à destination du module M1. L'unité logique UL1 effectue un « relai » du signal TTL haut fourni par le contrôleur C2 au contrôleur C1 immédiatement et sans traitement.

> L'unité logique **UL2** est utilisée par le micro-contrôleur pour l'exécution d'un second groupe d'étapes illustré à la **Figure 8B****.** L'unité logique UL2 est exécutée une fois l'exécution de l'unité UL1 terminée.

Dans une **étape 1,** le contrôleur C1 du module M1 envoie un signal de pilotage TTL S1₀ haut à l'unité logique UL2 lorsque la sélection de la longueur d'onde d'excitation λ2 a été réalisée par le contrôleur C1,

Dans une **étape 2,** l'unité logique UL2 effectue un point de contrôle. Il envoie un signal de pilotage TTL S1 haut au contrôleur du module M2 lorsque deux conditions sont remplies : réception du signal de pilotage TTL S1₀ provenant du module M1 et contrôle que le signal de pilotage TTL S2₀ du contrôleur C2 est bas confirmant que le traitement de la prise de vue est terminé. Le contrôleur C2 déclenche une prise de vue de l'échantillon lorsqu'il reçoit le signal de pilotage TTL S1 haut de l'unité logique UL2, ce qui signifie que le module M1 a effectué sa fonction et que le module M2 est prêt pour cette prise de vue. Le signal de pilotage TTL S1 haut reçu par le contrôleur C2 est interprété comme étant un signal de déclenchement d'une prise de vue de l'échantillon.

Dans une **étape 3,** le contrôleur C2 envoie un signal de pilotage TTL S2₀ haut à l'unité logique UL2 lorsque le contrôleur C2 a réalisé la prise de vue de l'échantillon exposé à la longueur d'onde λ2 et à la position z1. En parallèle, le contrôleur C2 effectue un traitement de la prise de vue.

Dans une **étape 4,** l'unité logique UL2 relaye le signal de pilotage TTL haut aux contrôleurs C1 et C3 en envoyant, sur réception du signal de pilotage TTL S2₀, d'une part un signal de pilotage TTL S2 haut au contrôleur du module M1 et d'autre part un signal de pilotage TTL S3 haut au contrôleur du module M3. Le contrôleur C1 déclenche la sélection d'une nouvelle longueur d'onde d'excitation λ1 lorsqu'il reçoit le signal de pilotage TTL S2 haut de l'unité logique UL2 (Fonction F1). Le signal de pilotage TTL S2 haut reçu par le contrôleur C1 est interprété comme étant un signal de déclenchement d'une sélection d'une nouvelle longueur d'onde. Le contrôleur C3 déclenche la sélection d'une nouvelle position z2 lorsqu'il reçoit le signal de pilotage TTL S3 haut de l'unité logique UL2 (Fonction F3). Le signal de pilotage TTL S3 haut reçu par le contrôleur C3 est interprété comme étant un signal de déclenchement d'une sélection d'une nouvelle position de l'échantillon selon l'axe Z.

Puis s'alternent successivement l'exécution des unités logiques UL1 et UL2 pour les prises de vue (λ1, z2) et (λ2, z2). Les séquences d'images ne sont pilotées que par l'alternance successive des unités logiques qui transmettent sous condition les signaux logiques TTL entre les modules M1, M2 et M3.

En d'autres termes, par rapport aux premier et deuxième modes de réalisation décrits ci-dessus, le module logique ML agit comme un module centralisé gérant le pilotage en relayant les signaux de pilotage TTL entre les différents modules. Ceci peut être réalisé au moyen d'un câblage logique simple pour chaque groupe d'étapes du processus de pilotage. Un tel module de pilotage est donc adaptable à tout type de système d'imagerie en microscopie ; il suffit de modifier les fonctions logiques du module en modifiant le câblage de celui-ci en fonction de l'architecture imposé par le système d'imagerie. Ce module de pilotage ML peut en outre comprendre une interface homme/machine configurée de manière à être intuitive pour l'utilisateur, ce dernier pouvant choisir la séquence d'acquisition souhaitée (nombre de longueurs d'onde, nombre d'images, nombre de déplacements en z etc.).

D'une façon générale, le module logique ML permet de créer de manière programmatique et coordonnée une série de variantes d'unités logiques et ainsi par exemple d'opérer la séquence présentée précédemment en alternant de manière immédiate les deux unités logiques UL1 et UL2. Ce module logique est constitué d'un microcontrôleur dédié qui exécute des macro-commandes simples, préalablement chargé par un ordinateur, permettant de connecter en direct ou en conditionnel des entrées-sorties. Ainsi, on peut prévoir tout type d'unités logiques et les charger sur le module logique de manière immédiate et ainsi créer des séquences de variantes pour opérer tout type d'acquisition, et ce sans sortir du cadre de l'invention.

Le module logique ML comprend un microcontrôleur lui-même comprenant :
- des moyens d'émission *OUT L1* du signal de pilotage S2 au module fonctionnel M1, activés lorsque le module fonctionnel M2 a réalisé sa fonction F2 (i.e. sur réception du signal S2₀);
- des moyens de réception *IN L1* du signal de pilotage S1₀ envoyé par le module M1 ;
- des moyens d'émission *OUT L2* du signal de pilotage S1 au module fonctionnel M2, activés lorsque le module fonctionnel M1 a réalisé sa fonction F1 et lorsque le module fonctionnel M3 a réalisé sa fonction F3 (i.e. sur réception du signal S2₀ et du signal S4);
- des moyens de réception *IN L2* du signal de pilotage S2₀ envoyé par le module M2 ;
- des moyens d'émission *OUT L3* du signal de pilotage S3 au module fonctionnel M3, activés lorsque le module fonctionnel M2 a réalisé sa fonction F2 (i.e. sur réception du signal S2₀);
- des moyens de réception *INL3* du signal de pilotage S4 envoyé par le module M3.

Les modes de réalisation particuliers présentés ici ont permis d'illustrer une technique de pilotage de deux ou trois modules fonctionnels. Comme illustré à la **figure 9****,** on pourrait prévoir de mettre en oeuvre un mode de pilotage multi-module permettant de piloter N modules fonctionnels (M1 à M_{N}), avec N > 3, en extrapolant le principe de l'invention détaillé ci-dessus en relation avec les figures 3 à 8, sans sortir du cadre de l'invention, le pilotage pouvant être effectué soit par l'un des modules fonctionnels du dispositif d'imagerie (selon le principe des fig. 3 à 6), soit par un module logique dédié (selon le principe des fig. 8A-8B).

## Revendications

1. Procédé de pilotage d'une pluralité de modules fonctionnels compris dans un dispositif d'imagerie en microscopie (20) multi-longueur d'onde configuré pour prendre une pluralité de prises de vue d'un échantillon soumis à différentes longueurs d'onde d'excitation, ledit dispositif d'imagerie comprenant au moins un premier (M1), un deuxième (M2) et un troisième (M3) modules fonctionnels, adaptés respectivement pour réaliser une première (F1), une deuxième (F2 et une troisième (F3) fonctions,
- le premier module fonctionnel (M1) étant un module de sélection de longueur d'onde et la première fonction (F1) consistant à réaliser une sélection d'au moins une longueur d'onde d'excitation de l'échantillon,
- le deuxième module fonctionnel (M2) étant un module de capture d'images et la deuxième fonction (F2) consistant à réaliser une prise de vue de l'échantillor
- le troisième module fonctionnel (M3) étant un module de positionnement de l'échantillon et la troisième fonction (F3) consistant à réaliser un déplacement de l'échantillon dans au moins une direction de l'espace,
le procédé comprenant au moins une itération des étapes suivantes :
a) envoi, par un module logique dédié (ML) indépendant des premier et deuxième modules, d'un premier signal de pilotage (S1) au deuxième module fonctionnel (M2) lorsque le premier module fonctionnel (M1) a réalisé ladite première fonction (F1) ;
b) le deuxième module fonctionnel (M2) déclenche ladite deuxième fonction (F2) sur réception du premier signal de pilotage (S1) ;
c) envoi, par ledit module logique dédié (ML), d'un deuxième signal de pilotage (S2) au premier module fonctionnel (M1) lorsque le deuxième module fonctionnel (M2) a réalisé ladite deuxième fonction (F2) ;
d) le premier module fonctionnel (M1) déclenche ladite première fonction (F1) sur réception du deuxième signal de pilotage (S2),
le procédé étant **caractérisé en ce que** If
le module logique dédié est équipé d'un micro-contrôleur dédié, chargé d'exécuter le procédé de pilotage, le micro-contrôleur comprenant une succession/alternance d'unités logiques, chaque unité logique mettant en oeuvre un groupe d'étapes spécifiques dans une acquisition complexe, les unités logiques étant précâblées de sorte à pouvoir effectuer les opérations logiques permettant le pilotage des trois modules fonctionnels.

2. Procédé selon la revendication 1, le procédé comprenant en outre les étapes suivantes :
- lorsque le deuxième module fonctionnel (M2) a réalisé ladite deuxième fonction (F2), le module logique dédié (ML) envoie un troisième signal de pilotage (S3) au troisième module fonctionnel (M3) en même temps que l'étape d'envoi du deuxième signal de pilotage (S2) au premier module fonctionnel (M1) ;
- le troisième module fonctionnel (M3) déclenche l'activation de ladite troisième fonction (F3) sur réception du troisième signal de pilotage (S3) ;
- le troisième module fonctionnel (M3) envoie un quatrième signal de pilotage (S4) au module logique dédié (ML) lorsque le troisième module fonctionnel (M3) a réalisé ladite troisième fonction (F3) ;
et dans lequel l'étape a) d'envoi d'un premier signal de pilotage (S1) au deuxième module fonctionnel (M2) est effectuée lorsque le premier module fonctionnel (M1) a réalisé ladite première fonction (F1) et sur réception du quatrième signal de pilotage.

3. Système de pilotage d'une pluralité de modules fonctionnels compris dans un dispositif d'imagerie en microscopie multi-longueur d'onde configuré pour prendre une pluralité de prises de vue d'un échantillon soumis à différentes longueurs d'onde d'excitation, ledit dispositif d'imagerie comprenant au moins un premier (M1), un deuxième (M2) et un troisième (M3) modules fonctionnels, adaptés respectivement pour réaliser une première (F1), une deuxième (F2 et une troisième (F3) fonctions,
le système comprenant :
- des moyens d'émission d'un premier signal de pilotage (S1) au deuxième module fonctionnel (M2), activés par un module logique dédié (ML) indépendant des premier et deuxième modules lorsque le premier module fonctionnel (M1) a réalisé ladite première fonction (F1) ;
- des moyens de déclenchement de ladite première fonction (F1), activés sur réception d'un deuxième signal de pilotage (S2) reçu depuis le deuxième module fonctionnel (M2) ;
- des moyens de déclenchement de ladite deuxième fonction (F2), activés sur réception du premier signal de pilotage (S1) reçu depuis le premier module fonctionnel (M1) ;
- des moyens d'émission du deuxième signal de pilotage (S2) au premier module fonctionnel (M1), activés par ledit module logique dédié (ML) lorsque le deuxième module fonctionnel (M2) a réalisé ladite deuxième fonction (F2) ;
le premier module fonctionnel (M1) étant est un module de sélection de longueur d'onde et la première fonction (F1) consistant à réaliser une sélection d'au moins une longueur d'onde d'excitation de l'échantillon, le deuxième module fonctionnel (M2) étant un module de capture d'images et la deuxième fonction (F2) consistant à réaliser une prise de vue de l'échantillon,
et le troisième module fonctionnel (M3) étant un module de positionnement de l'échantillon et la troisième fonction (F3) consistant à réaliser un déplacement de l'échantillon dans au moins une direction de l'espace,
le système étant **caractérisé en ce que** If
le module logique dédié est équipé d'un micro-contrôleur dédié, chargé d'exécuter le procédé de pilotage, le micro-contrôleur comprenant une succession/alternance d'unités logiques, chaque unité logique mettant en oeuvre un groupe d'étapes spécifiques dans une acquisition complexe, les unités logiques étant précâblées de sorte à pouvoir effectuer les opérations logiques permettant le pilotage des trois modules fonctionnels. If

4. Système selon la revendication 3, comprenant en outre :
- des moyens d'émission d'un troisième signal de pilotage (S3) au troisième module fonctionnel (M3), activés par ledit module logique dédié (ML) ;
- des moyens de déclenchement de ladite troisième fonction (F3), activés sur réception du troisième signal de pilotage (S3) ;
- des moyens d'émission d'un quatrième signal de pilotage (S4) au module logique dédié (ML) lorsque le troisième module fonctionnel (M3) a réalisé ladite troisième fonction (F3).

5. Système selon l'une quelconque des revendications 3 et 4, dans lequel le module de sélection de longueurs d'onde comprend un ensemble de deux prismes optiques (41, 42) disposés de part et d'autre d'une fente (40) montée mobile en translation et contrôlée par le deuxième signal de pilotage (S2) envoyé par le deuxième module fonctionnel (M2) pour réaliser une sélection d'au moins une longueur d'onde d'excitation.

## Patentansprüche

1. Verfahren zum Ansteuern einer Anzahl von Funktionsmodulen, die in einer Bildgebungsvorrichtung (20) für Multiwellenlängenmikroskopie enthalten sind, die konfiguriert ist, um eine Anzahl von Aufnahmen einer Probe zu machen, die verschiedenen Anregungswellenlängen ausgesetzt ist, wobei die Bildgebungsvorrichtung mindestens ein erstes (M1), ein zweites (M2) und ein drittes (M3) Funktionsmodul umfasst, diejeweils angepasst sind, um eine erste (F1), eine zweite (F2) und eine dritte (F3) Funktion auszuführen,
- wobei das erste Funktionsmodul (M1) ein Wellenlängenauswahlmodul ist und die erste Funktion (F1) darin besteht, eine Auswahl von mindestens einer Anregungswellenlänge der Probe durchzuführen,
- wobei das zweite Funktionsmodul (M2) ein Bildaufnahmemodul ist und die zweite Funktion (F2) darin besteht, eine Bildaufnahme der Probe durchzuführen,
- wobei das dritte Funktionsmodul (M3) ein Modul zur Positionierung der Probe ist, und die dritte Funktion (F3) besteht darin, eine Bewegung der Probe in mindestens einer Raumrichtung durchzuführen,
wobei das Verfahren mindestens eine Iteration der folgenden Schritte umfasst:
a) Senden eines ersten Steuersignals (S1) an das zweite Funktionsmodul (M2) mittels eines von dem ersten und zweiten Modul unabhängigen dedizierten Logikmoduls (ML), wenn das erste Funktionsmodul (M1) die erste Funktion (F1) ausgeführt hat;
b) das zweite Funktionsmodul (M2) löst die zweite Funktion (F2) bei Empfang des ersten Steuersignals (S1) aus;
c) Senden eines zweiten Steuersignals (S2) an das erste Funktionsmodul (M1) mittels des dedizierten Logikmoduls (ML), wenn das zweite Funktionsmodul (M2) die zweite Funktion (F2) ausgeführt hat;
d) das erste Funktionsmodul (M1) löst die erste Funktion (F1) bei Empfang des zweiten Steuersignals (S2) aus,
wobei das Verfahren **dadurch gekennzeichnet ist, dass**
das dedizierte Logikmodul mit einem dedizierten Mikrocontroller ausgestattet ist, der für die Ausführung des Steuerungsverfahrens verantwortlich ist, wobei der Mikrocontroller eine Abfolge/Abwechslung von logischen Einheiten umfasst, wobei jede logische Einheit eine Gruppe von spezifischen Schritten in einer komplexen Erfassung implementiert, wobei die logischen Einheiten vorverdrahtet sind, so dass sie die logischen Operationen durchführen können, die die Steuerung der drei Funktionsmodule ermöglichen.

2. Verfahren nach Anspruch 1, wobei das Verfahren außerdem die folgenden Schritte umfasst:
- wenn das zweite Funktionsmodul (M2) die zweite Funktion (F2) ausgeführt hat, sendet das dedizierte Logikmodul (ML) ein drittes Steuersignal (S3) an das dritte Funktionsmodul (M3) zur gleichen Zeit wie der Schritt des Sendens des zweiten Treibersignals (S2) an das erste Funktionsmodul (M1);
- das dritte Funktionsmodul (M3) löst die Aktivierung der dritten Funktion (F3) bei Empfang des dritten Steuersignals (S3) aus;
- das dritte Funktionsmodul (M3) sendet ein viertes Steuersignal (S4) an das dedizierte Logikmodul (ML), wenn das dritte Funktionsmodul (M3) die dritte Funktion (F3) ausgeführt hat;
und wobei der Schritt a) des Sendens eines ersten Steuersignals (S1) an das zweite Funktionsmodul (M2) ausgeführt wird, wenn das erste Funktionsmodul (M1) die erste Funktion (F1) ausgeführt hat und bei Empfang des vierten Steuersignals.

3. System zur Ansteuerung einer Anzahl von Funktionsmodulen, die in einer Bildgebungsvorrichtung für Multiwellenlängenmikroskopie enthalten sind, die so konfiguriert ist, dass sie eine Anzahl von Aufnahmen einer Probe macht, die verschiedenen Anregungswellenlängen ausgesetzt ist, wobei die Bildgebungsvorrichtung mindestens ein erstes (M1), ein zweites (M2) und ein drittes (M3) Funktionsmodul umfasst, die jeweils dazu angepasst sind, eine erste (F1), eine zweite (F2) und eine dritte (F3) Funktion auszuführen,
wobei das System umfasst:
- Mittel zum Senden eines ersten Steuersignals (S1) an das zweite Funktionsmodul (M2), die von einem von dem ersten und zweiten Modul unabhängigen dedizierten Logikmodul (ML) aktiviert werden, wenn das erste Funktionsmodul (M1) die erste Funktion (F1) ausgeführt hat;
- Mittel zum Auslösen der ersten Funktion (F1), die bei Empfang eines zweiten Steuersignals (S2) aktiviert werden, das von dem zweiten Funktionsmodul (M2) empfangen wird;
- Mittel zum Auslösen der zweiten Funktion (F2), die bei Empfang des ersten Steuersignals (S1) aktiviert werden, das von dem ersten Funktionsmodul (M1) empfangen wird;
- Mittel zum Senden des zweiten Steuersignals (S2) an das erste Funktionsmodul (M1), die von dem dedizierten Logikmodul (ML) aktiviert werden, wenn das zweite Funktionsmodul (M2) die zweite Funktion (F2) ausgeführt hat;
wobei das erste Funktionsmodul (M1) ein Wellenlängenauswahlmodul ist und die erste Funktion (F1) darin besteht, eine Auswahl von mindestens einer Anregungswellenlänge der Probe durchzuführen,
wobei das zweite Funktionsmodul (M2) ein Bildaufnahmemodul ist und die zweite Funktion (F2) darin besteht, eine Bildaufnahme der Probe durchzuführen,
und das dritte Funktionsmodul (M3) ein Modul zur Positionierung der Probe ist und die dritte Funktion (F3) darin besteht, eine Bewegung der Probe in mindestens einer Raumrichtung durchzuführen,
wobei das System **dadurch gekennzeichnet ist, dass**
das dedizierte Logikmodul mit einem dedizierten Mikrocontroller ausgestattet ist, der dafür verantwortlich ist, das Steuerungsverfahren durchzuführen, wobei der Mikrocontroller eine Abfolge/Abwechslung von logischen Einheiten umfasst, wobei jede logische Einheit eine Gruppe von spezifischen Schritten in einer komplexen Erfassung implementiert, wobei die logischen Einheiten vorverdrahtet sind, so dass sie die logischen Operationen durchführen können, die die Steuerung der drei Funktionsmodule ermöglichen.

4. System nach Anspruch 3, das außerdem Folgendes umfasst:
- Mittel zum Senden eines dritten Steuersignals (S3) an das dritte Funktionsmodul (M3), die von dem dedizierten Logikmodul (ML) aktiviert werden;
- Mittel zum Auslösen der dritten Funktion (F3), die bei Empfang des dritten Steuersignals (S3) aktiviert werden;
- Mittel zum Senden eines vierten Steuersignals (S4) an das dedizierte Logikmodul (ML), wenn das dritte Funktionsmodul (M3) die dritte Funktion (F3) ausgeführt hat.

5. System nach einem der Ansprüche 3 oder 4, bei dem das Wellenlängenauswahlmodul ein Satz von zwei optischen Prismen (41, 42) umfasst, die auf beiden Seiten eines Spaltes (40) angeordnet sind, der translatorisch beweglich montiert ist und durch das zweite von dem zweiten Funktionsmodul (M2) gesendeten Steuersignal (S2) gesteuert wird, um eine Auswahl mindestens einer Anregungswellenlänge zu durchzuführen.

## Claims

1. Method for driving a plurality of functional modules comprised in a multi-wavelength microscopy imaging device (20) configured to take a plurality of image shots of a sample subjected to different excitation wavelengths, said imaging device comprising at least one first (M1) one second (M2) and one third (M3) functional modules, adapted respectively to performing a first (F1) a second (F2) and a third (F3) functions,
- the first functional module (M1) being a wavelength-selection module and the first function (F1) consisting in making a selection of at least one excitation wavelength for the sample
- the second functional module (M2) being an image-capturing module and the second function (F2) consisting in taking an image shot of the sample,
- the third functional module (M3) being a sample-positioning module and the third function (F3) consisting in performing a shift of the sample in at least one direction of space,
the method comprising at least one iteration of the following steps:
a) sending, by a dedicated logic module (ML) independent of the first and second functional modules, a first driving signal (S1) to the second functional module (M2) when the first functional module (M1) has performed said first function (F1);
b) the second functional module (M2) triggers said function (F2) upon reception of the first driving signal (S1);
c) sending, by the dedicated logic module (ML), a second driving signal (S2) to the first functional module (M1) when the second functional module (M2) has performed said second function (F2);
d) the first functional module (M1) triggers said first function (F1) upon reception of the second driving signal (S2);
the method being **characterized in that** the dedicated logic module is equipped with a dedicated microcontroller responsible for executing the driving method, the microcontroller comprising a succession/alternation of logic units, each logic unit implementing one group of specific steps in a complex acquisition, the logic units being pre-wired so that they carry out logic operations enabling the driving of the three functional modules.

2. Method according to claim 1, the method further comprising the following steps:
- when the second functional module (M2) has performed said second function (F2), the dedicated logic module (ML) sends a third driving signal (S3) to the third functional module (M3) at the same time as the step for sending the second driving signal (S2) to the first functional module (M1);
- the third functional module (M3) triggers the activation of said third function (F3) upon reception of the third driving signal (S3);
- the third functional module (M3) sends a fourth driving signal (S4) to the dedicated logic module (ML) when the third functional module (M3) has performed said third function (F3);
and wherein the step a) for sending a first driving signal (S1) to the second functional module (M2) is carried out when the first functional module (M1) has performed said first function (F1) and upon reception of the fourth driving signal.

3. System for driving a plurality of functional modules comprised in a multi-wavelength microscopy imaging device configured to take a plurality of image shots of a sample subjected to different excitation wavelengths, said imaging device comprising at least one first (M1) one second (M2) and one third (M3) functional modules, adapted respectively to performing a first (F1) a second (F2) and a third (F3) functions,
the system comprising:
- means for sending out a first driving signal (S1) to the second functional module (M2) activated by a dedicated logic module (ML) independent of the first and second functional modules, when the first functional module (M1) has performed said first function (F1);
- means for triggering said first function (F1), activated upon reception of the first driving signal (S2) received from the second functional module (M2);
- means for triggering said second function (F2), activated upon reception of the first driving signal (S1) received from the first functional module (M1);
- means for sending out the second driving signal (S2) to the first functional module (M1), activated by said dedicated logic module (ML) when the second functional module (M2) has performed said second function (F2);
the first functional module (M1) being a wavelength-selection module and the first function (F1) consisting in making a selection of at least one excitation wavelength for the sample,
the second functional module (M2) being an image-capturing module and the second function (F2) consisting in taking an image shot of the sample,
the third functional module (M3) being a sample-positioning module and the third function (F3) consisting in performing a shift of the sample in at least one direction of space,
the system being **characterized in that** the dedicated logic module is equipped with a dedicated microcontroller responsible for executing the driving method, the microcontroller comprising a succession/alternation of logic units, each logic unit implementing one group of specific steps in a complex acquisition, the logic units being pre-wired so that they carry out logic operations enabling the driving of the three functional modules.

4. System according to claim 3, further comprising:
- means for sending out a third driving signal (S1') to the third functional module (M3), activated upon reception of the second driving signal (S2);
- des means for triggering said third function (F3), activated upon reception of third driving signal (S1');
- means for sending a fourth driving signal (S4) to the dedicated logic module (ML) when the third functional module (M3) has performed said third function F3).

5. System according to any one of the claims 3 and 4, wherein the wavelength-selection module comprises a set of two optical prisms (41, 42) disposed on either side of a slot (40) mounted so as to be mobile in translation and controlled by the second driving signal (S2) sent by the second functional module (M2) to make a selection of at least one excitation wavelength.
